# EUROPÄISCHE PATENTANMELDUNG

(11) **EP 1 912 419 A1**
(43) Veröffentlichungstag der Anmeldung: **16.04.2008**
(21) Anmeldenummer: 07019344.6
(22) Anmeldetag: 02.10.2007
(51) Int. Cl.: H04M 1/253, H04M 1/675

(54) **Personalisierung eines VoIP-Endgeräts**

(30) Priorität: 09.10.2006 DE 102006047649
(71) Anmelder: Giesecke & Devrient GmbH, 81677 München (DE)
(72) Erfinder: Bauer, Sven, Dr., 81543 München (DE); Aschauer, Hans, Dr., 81829 München (DE)

(57) **Zusammenfassung**

Die Erfindung schafft ein System zur Personalisierung eines VoIP-Endgeräts für eine VoIP-Verbindung, mit einer mit dem VoIP-Endgerät koppelbaren Personalisierungseinrichtung, in der mindestens eine persönliche Einstellung dem VoIP-Endgerät für eine VoIP-Verbindung bereitstellbar ist. Die Personalisierungseinrichtung ist als ein mit einem Mikroprozessor-Chip ausgestattetes Sicherheitsmodul gestaltet. Ein entsprechendes Verfahren wird ebenfalls angegeben. Die Personalisierungseinrichtung kann als Chipkarte ausgeführt sein oder als Token.

## Beschreibung

Die Erfindung betrifft ein System zur Personalisierung eines VoIP-Endgeräts für eine VoIP-Verbindung, mit einer mit dem VoIP-Endgerät koppelbaren Personalisierungseinrichtung, in der mindestens eine persönliche Einstellung dem VoIP-Endgerät für eine VoIP-Verbindung bereitstellbar ist.

Als kostengünstige Alternative zu herkömmlichen Telefonverbindungen etabliert sich zunehmend die Internet-Protokoll(IP)-basierte Telefonie. Hierbei werden Sprachdaten über eine Internet-Protokoll(IP)-basierte Verbindung übertragen, z.B. über das Internet, oder über eine LAN-Verbindung (LAN= Local Area Network) oder über eine WLAN-Verbindung (WLAN = Wireless LAN). Jedoch auch für Multimediasitzungen im Allgemeinen, wie beispielsweise Videokonferenzen, bieten sich Internet-Protokoll(IP)-basierte Verbindungen an. Neben Sprachdaten können über die Internet-Protokoll(IP)-basierte Verbindung beispielsweise Videodaten übertragen werden, und je nach Bedarf weitere Daten, z.B. Unterlagen für die Teilnehmer an der Multimediasitzung.

Mit dem Begriff VoIP-Verbindung wird jede Art von IP-basierter Sitzung insbesondere Multimediasitzung unter Verwendung von VoIP-Protokollen bezeichnet. Spezialfälle von VoIP-Verbindungen sind Internettelefonie-Verbindungen (IP-basierte Telefonie-Verbindungen).

Die grundlegende Funktionsweise von VoIP ist beispielsweise in einer Studie des Bundesamts für Sicherheit in der Informationstechnik (BSI) eingegangen, "VoIPSEC, Studie zur Sicherheit von Voice over Internet Protocol", Bundesamt für Sicherheit in der Informationstechnik, Oktober 2005, http://www.bsi.bund.de (BSI-Studie), oder in einer Studie des National Institute of Standards and Technology (NIST), "Security Considerations for Voice Over IP Systems", D.R. Kuhn, T.J. Walsh, S. Fries, Januar 2005 (NIST-Studie), beschrieben. Dort sind auch Beispiele von Multimediasitzungen angegeben, insbesondere im Kapitel "2.1.2 VoIP-Anwendungsszenarien" der BSI-Studie. Einzelne Spezifikationen, die für die vorliegende Erfindung von Bedeutung sind, sind beispielsweise die SIP-Spezifikation rfc3261 und die MIKEY-Spezifikation rfc3830.

Bei einer herkömmlichen, leitungsvermittelten Telefonverbindung ist jedes Endgerät an einen festen Port physikalisch angeschlossen, durch den die Authentizität jedes Teilnehmer-Anschlusses gewährleistet ist. Weiter stellt das Telefonnetz den verbundenen Endgeräten einen festen Kanal zur Sprachübertragung zur Verfügung, so dass eine gewisse Vertraulichkeit der Sprachübertragung zwischen den Endgeräten gewährleistet ist.

Bei einer Internet-Protokoll(IP)-basierten Verbindung sind die Teilnehmer, z.B. Anrufer und Angerufener, durch ihre jeweilige IP-Adresse identifiziert, die variieren kann. Die Sprachdatenübermittlung erfolgt paketorientiert und der Verbindung ist kein fester Übertragungskanal zugewiesen. Zu übertragende Daten werden in Pakete aufgeteilt, jedes Paket mit der IP-Adresse des Angerufenen versehen, und die Pakete an die IP-Adresse des Angerufenen versandt, wobei die Übertragungswege der einzelnen Pakete in der Regel unterschiedlich sind.

Im Bild eines mehrschichtigen Protokollmodells (wie z.B. OSI) baut eine VoIP-Verbindung auf dem Internet-Protokoll IP als einer unteren Protokollschicht auf, auf der, direkt oder über weitere Schichten, mehrere VoIP-spezifische Protokolle aufsetzen. Beispiele für VoIP-spezifische Protokolle sind das Protokoll H.323 und die H.323 untergeordneten Transportprotokolle RTP (Real-Time Transport Protocol) für die Echtzeit-Übertragung von Sprach- und Videodaten über paketorientierte Netze und SRTP (Secured RTP) für die verschlüsselte Echtzeit-Übertragung von Sprach- und Videodaten; das Signalisierungsprotokoll SIP (Session Initiation Protocol) oder H.323, das letztere mit einem der Signalisierungsprotokolle H.225 oder H.245, für die Signalisierung, also den Verbindungsaufbau; das auf das Signalisierungsprotokoll (z.B. SIP, H.225, H.245) aufsetzende Schlüsselverwaltungsprotokoll MIKEY (Multimedia Internet Keying) oder das auf das Transportprotokoll RTP aufsetzende Schlüsselverwaltungsprotokoll ZRTP für eine Authentisierung zwischen Teilnehmern an einer VoIP-Verbindung, die Erzeugung von Schlüsseln und den Schlüsselaustausch für eine nachfolgende verschlüsselte Verbindung nach SRTP.

Als Endgeräte für VoIP-Verbindungen können beispielsweise verwendet werden: Festnetztelefone ("Hardphones"), Konferenzanlagen, Mobiltelefone und andere mobile Endgeräte wie PDAs, Notebooks mit Mobiltelefonsteckkarte oder -token; oder sogenannte Softphones, d.h. Computer (PCs, Notebooks, PDAs etc.) mit einer integrierten Software-Anwendung mit der Funktionalität eines Telefons im weitesten Sinn, z.B. eines der vorstehend angeführten Endgeräte. Mögliche VoIP-Endgeräte sind beispielsweise in der NIST-Studie im Kapitel "2.VoIP-Equipment" angegeben, oder in der BSI-Studie im Kapitel "3.3.3 VoIP-Endgeräte".

Die VoIP-Verbindung zwischen den Endgeräten der Teilnehmer erfolgt über ein oder mehrere Verbindungsserver, beispielsweise bei SIP über sogenannte Proxy-Server, bei H.323 über sogenannte Gatekeeper. Jedem Endgerät ist ein Verbindungsserver zugeordnet. Je nach Transportprotokoll werden über die VoIP-Verbindung Daten unverschlüsselt (z.B. bei RTP) oder verschlüsselt übertragen (z.B. bei SRTP oder bei ZRTP). Optional authentisieren sich die Teilnehmer an der VoIP-Verbindung gegenseitig mit geheimen Schlüsseln und/ oder Zertifikaten. Für die Authentisierung, insbesondere für Erzeugung und Austausch von Schlüsseln bzw. Zertifikaten dabei, wird ein Schlüsselaustauschprotokoll abgearbeitet, z.B. MIKEY oder ZRTP.

Damit ein VoIP-Endgerät für eine VoIP-Verbindung genutzt werden kann, muss es personalisiert werden, d.h. mit persönlichen Einstellungen versehen werden. Manche persönliche Einstellungen sind zwingend notwendig, beispielsweise die Adresse des zugeordneten Verbindungsservers (z.B. SIP-Proxy), sowie ggf. eine Benutzerkennung und ein Passwort für den Zugang zu diesem Verbindungsserver. Für verschlüsselte VoIP-Verbindungen und Authentisierungen müssen dem Endgerät als persönliche Einstellungen geheime Schlüssel und Zertifikate bereitgestellt werden. Wahlweise müssen Sicherheitseinstellungen erstellt und eingegeben werden. Andere persönliche Einstellungen machen die Benutzung des VoIP-Endgeräts komfortabler, beispielsweise ein Adressbuch, oder eine Rufnummernunterscheidung, mit der auf unterschiedliche Anrufer unterschiedlich reagiert werden kann.

Herkömmlicherweise werden VoIP-Endgeräte durch explizite Eingabe der persönlichen Einstellungen personalisiert. Bei einem Softphone erfolgt die Eingabe der Einstellungen beispielsweise durch Eingaben über die Tastatur des Computers, auf dem das Softphone implementiert ist. Bei einem Festnetztelefon, Mobiltelefon, PDA oder dergleichen erfolgt die Eingabe der Einstellungen beispielsweise über Tasteneingaben. Die persönlichen Einstellungen werden in einem Speicher im VoIP-Endgerät abgespeichert, also beispielsweise in einem Telefon oder in einem Speicherbereich des Computers, in dem das Softphone implementiert ist.

Im Endgerät abgespeicherte Schlüssel und Zertifikate sind relativ ungeschützt gegenüber Angriffen, mit denen Unberechtigte versuchen, die Schlüssel bzw. Zertifikate auszulesen. Die herkömmliche Art der Personalisierung hat somit Sicherheitsmängel. Herkömmlicherweise wird ein Endgerät beispielsweise dadurch geschützt, dass der räumliche Zugriff darauf verhindert wird. Ein Computer kann mit Virenschutzprogrammen geschützt werden. Schutzmaßnahmen wie den räumlichen Zugriff zu verhindern ("Wegsperren") oder Virenschutzprogramme zu installieren und zu pflegen erfordern Disziplin und sind daher unkomfortabel und damit nicht zuletzt fehleranfällig.

Bei einem Wechsel von einem alten auf ein neues Endgerät, beispielsweise bei einem Umzug oder, da das alte Endgerät defekt oder veraltet ist, müssen die persönlichen Einstellungen mühsam am neuen Endgerät erneut vorgenommen werden. Dadurch ist die herkömmliche Art der Personalisierung eines VoIP-Endgeräts zudem umständlich und unflexibel. Das Erstellen von Sicherheitseinstellungen kann in manchen Fällen an sich bereits so aufwändig sein, dass es für Nutzer eines VoIP-Telefons kaum zumutbar ist.

Auf dem Gebiet der Mobilfunkverbindungen wird ein anderes Personalisierungskonzept verwendet, gemäß dem ein Mobiltelefon mit einer SIM-Karte betrieben wird, in der individuelle Daten eines Nutzers des Mobiltelefon abgespeichert sind, beispielsweise die IMSI (International Mobile Subscriber Identity) oder der Authentisierungsschlüssel Ki.

Der Erfindung liegt die Aufgabe zu Grunde, die Personalisierung von VoIP-Endgeräten sicherer und komfortabler zu machen.

Das in Anspruch 1 angegebene erfindungsgemäße System ist zur Personalisierung eines VoIP-Endgeräts für eine VoIP-Verbindung vorgesehen. Das System ist mit einer mit dem VoIP-Endgerät koppelbaren Personalisierungseinrichtung ausgestattet, in der mindestens eine persönliche Einstellung dem VoIP-Endgerät bereitstellbar ist, so dass das Endgerät die persönliche Einstellung für eine VoIP-Verbindung nutzen kann. Das System zeichnet sich dadurch aus, dass die Personalisierungseinrichtung als ein mit einem Mikroprozessor-Chip ausgestattetes Sicherheitsmodul gestaltet ist.

Dadurch dass als Personalisierungseinrichtung ein mit einem Mikroprozessor-Chip ausgestatteten Sicherheitsmodul vorgesehen ist, sind Hacker-Angriffe auf die Personalisierungseinrichtung erschwert oder unmöglich gemacht. Das erfindungsgemäße System ist somit gegenüber einer herkömmlichen Art der Personalisierung sicherer. Zudem können Schutzmaßnahmen wie ein Wegsperren des Endgeräts oder die Installation von Virenschutzprogrammen und dergleichen entfallen. Das erfindungsgemäße Verfahren ist somit zusätzlich komfortabler.

Das Sicherheitsmodul ist wahlweise in ein Endgerät für VoIP-Verbindungen fest oder entfernbar implementierbar. Als fest implementierbares Sicherheitsmodul kann beispielsweise ein TPM-artiges Modul (TPM = Trusted Platform Module) vorgesehen sein.

Wahlweise, gemäß einer Variante, ist das Sicherheitsmodul als in das Endgerät entfernbar einfügbarer tragbarer Datenträger gestaltet, beispielsweise als Chipkarte oder Token, oder als sonstiges "Embedded System" mit einem Körper, in den der Mikroprozessorchip eingebettet ist. Das System gemäß dieser Variante hat den zusätzlichen besonderen Vorteil, dass die persönlichen Einstellungen beim Wechsel des Endgeräts von einem alten Endgerät auf ein neues Endgerät mitgenommen werden können, um das neue Endgerät entsprechend wie das alte Endgerät zu personalisieren. Eine mühsame erneute Eingabe der persönlichen Einstellungen in das neue Endgerät ist überflüssig. Da der tragbare Datenträger als Sicherheitsmodul gestaltet ist, sind die Einstellungen darin geschützt. Daher stellt es kein Sicherheitsrisiko dar, dass der Datenträger aus dem Endgerät entfernbar ist. Das System mit der Personalisierungseinrichtung gemäß der Variante ist also nach wie vor sicher, zugleich aber besonders komfortabel.

Wahlweise ist eine Bearbeitung von persönlichen Einstellungen in der Personalisierungseinrichtung erst nach einer erfolgreichen Authentisierung gegenüber der Personalisierungseinrichtung, insbesondere gegenüber dem Sicherheitsmodul, möglich. Die Bearbeitung der Einstellungen umfasst insbesondere zumindest eines von: Speichern, Löschen, Verändern einer Einstellung. Die Authentisierung kann beispielsweise eine Eingabe einer PIN (Personal Identification Number) umfassen.

Als persönliche Einstellung, die eine für VoIP-Verbindungen spezifische Einstellung ist, ist wahlweise mindestens eine der folgenden vorgesehen: die Adresse eines dem VoIP-Endgerät zugeordneten Verbindungsservers (z.B. SIP-Proxy oder H.323 Gatekeeper), eine Benutzerkennung und ein Passwort für den Zugang zu diesem Verbindungsserver; ein geheimer Schlüssel und/oder ein Zertifikat für eine Authentisierung zwischen dem VoIP-Endgerät und mindestens einem weiteren VoIP-Endgerät; ein geheimer Schlüssel und/ oder ein Zertifikat für eine verschlüsselte Datenübertragung zwischen VoIP-Endgeräten; Sicherheitseinstellungen; ein Adressbuch; eine Rufnummernunterscheidung, mittels der auf unterschiedliche Anrufer unterschiedlich reagiert werden kann. Als geheime Schlüssel bzw. Zertifikate können insbesondere Schlüssel bzw. Zertifikate gemäß einem VoIPspezifischen Protokoll vorgesehen sein, wie z.B. MIKEY, ZRTP, SRTP etc..

Wahlweise ist in der Personalisierungseinrichtung mindestens eine persönliche Einstellung abgespeichert, z.B. eine oder mehrere der oben angeführten.

Bei einem erfindungsgemäßen Verfahren zur Personalisierung eines VoIP-Endgeräts wird dem VoIP-Endgerät, für eine VoIP-Verbindung, in einer mit dem VoIP-Endgerät koppelbaren Personalisierungseinrichtung mindestens eine persönliche Einstellung bereitgestellt. Die Personalisierungseinrichtung ist dabei als ein mit einem Mikroprozessor-Chip ausgestattetes Sicherheitsmodul gestaltet.

Im Folgenden wird die Erfindung an Hand von Ausführungsbeispielen und unter Bezugnahme auf die Zeichnung näher erläutert, in der zeigen:
- Fig.1: ein System mit einer Personalisierungseinrichtung, gemäß einer ersten Ausführungsform der Erfindung, und ein Endgerät;
- Fig. 2: ein System mit einer Personalisierungseinrichtung, gemäß einer zweiten Ausführungsform der Erfindung, und ein Endgerät;
- Fig. 3: ein System mit einer Personalisierungseinrichtung, gemäß einer dritten Ausführungsform der Erfindung, und ein Endgerät.

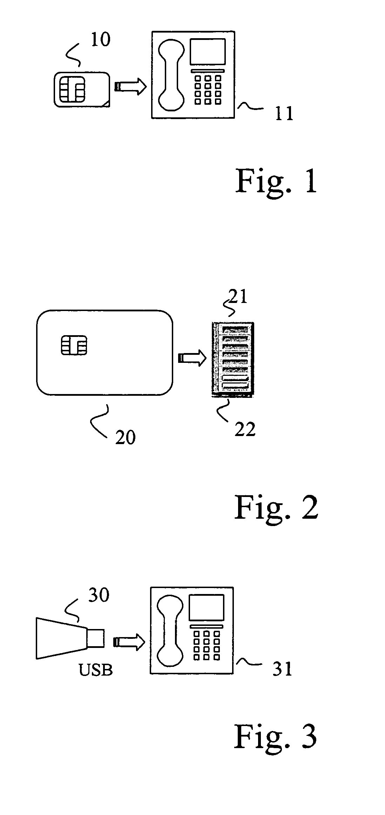

Fig.1 zeigt ein System mit einer Personalisierungseinrichtung 10, gemäß einer ersten Ausführungsform der Erfindung, und ein Endgerät 11. Die Personalisierungseinrichtung 10 ist als Chipkarte im Format ID-000 nach ISO 7810 gestaltet. Das Endgerät 11 ist als Festnetztelefon gestaltet, das einen Kartenleser für Chipkarten im Format ID-000 aufweist.

Fig. 2 zeigt ein System mit einer Personalisierungseinrichtung 20, gemäß einer zweiten Ausführungsform der Erfindung, und ein Endgerät 21. Die Personalisierungseinrichtung 20 ist als Chipkarte im Format ID-1 nach ISO 7810 gestaltet. Das Endgerät 21 ist als Softphone gestaltet, das in einem Computer 22 implementiert ist. Der Computer 22 weist einen Kartenleser für Chipkarten im Format ID-1 auf.

Fig. 3 zeigt ein System mit einer Personalisierungseinrichtung 30, gemäß einer dritten Ausführungsform der Erfindung, und eine Endgerät 31. Die Personalisierungseinrichtung 30 ist als USB-Token mit einem USB-Anschluss gestaltet. Das Endgerät 31 ist als Festnetztelefon gestaltet, das einen USB-Anschluss aufweist.

Das System aus Fig. 3 mit der Personalisierungseinrichtung 30, die als USB-Token mit einem USB-Anschluss gestaltet ist, lässt sich ebenso gut mit einem Softphone wie dem in Fig. 2 gezeigten kombinieren, das in einen Computer mit einem USB-Anschluss implementiert ist.

Die Personalisierungseinrichtung wurde in Fig.1-3 an Hand von drei Beispielen veranschaulicht, kann jedoch in jeder beliebigen geeigneten Form als "Embedded System" mit einem in einen Körper eingebetteten Mikroprozessor-Chip gestaltet sein.

## Patentansprüche

1. System zur Personalisierung eines VoIP-Endgeräts für eine VoIP-Verbindung, mit einer mit dem VoIP-Endgerät koppelbaren Personalisierungseinrichtung, in der mindestens eine persönliche Einstellung dem VoIP-Endgerät für eine VoIP-Verbindung bereitstellbar ist, **dadurch gekennzeichnet, dass** die Personalisierungseinrichtung als ein mit einem Mikroprozessor-Chip ausgestattetes Sicherheitsmodul gestaltet ist.

2. System nach Anspruch 1, wobei das Sicherheitsmodul in das VoIP-Endgerät fest oder entfernbar implementierbar ist.

3. System nach Anspruch 2, wobei das Sicherheitsmodul als in das Endgerät entfernbar einfügbarer tragbarer Datenträger gestaltet ist, insbesondere als Chipkarte oder Token gestaltet ist.

4. System nach einem der Ansprüche 1 bis 3, wobei die Personalisierungseinrichtung so eingerichtet ist, dass eine Bearbeitung von persönlichen Einstellungen in der Personalisierungseinrichtung erst nach einer erfolgreichen Authentisierung gegenüber der Personalisierungseinrichtung möglich ist.

5. System nach einem der Ansprüche 1 bis 4, wobei in der Personalisierungseinrichtung mindestens eine persönliche Einstellung abgespeichert ist.

6. Verfahren zur Personalisierung eines VoIP-Endgeräts für eine VoIP-Verbindung, wobei in einer mit dem VoIP-Endgerät koppelbaren Personalisierungseinrichtung mindestens eine persönliche Einstellung dem VoIP-Endgerät für eine VoIP-Verbindung bereitgestellt wird, **dadurch gekennzeichnet, dass** die Personalisierungseinrichtung als ein mit einem Mikroprozessor-Chip ausgestattetes Sicherheitsmodul gestaltet ist.
